# FASCICULE DE BREVET EUROPEEN

(11) **EP 1 172 138 B1**
(45) Date de publication et mention de la délivrance du brevet: **07.12.2005**
(21) Numéro de dépôt: 00115263.6
(22) Date de dépôt: 14.07.2000
(51) Int. Cl.: B01J 19/02, B01J 19/00, B01J 19/18, F28D 9/00

(54) **Appareil de réaction et dispositif échangeur de chaleur pour cet appareil**
Vorrichtung sowie Wärmeaustauscher dafür
Apparatus and heat exchanger therefor

(43) Date de publication de la demande: 16.01.2002
(73) Titulaire: BIAZZI SA, CH-1816 Chailly, Montreux (CH)
(72) Inventeur: Egloff, Serge, 1800 Vevey (CH)
(74) Mandataire: Micheli & Cie

(56) Documents cités:
- EP-A- 0 633 060
- FR-A- 2 392 349
- FR-A- 2 771 802
- US-A- 2 460 987
- US-A- 5 582 799

## Description

La présente invention concerne un appareil de réaction, ainsi qu'un dispositif échangeur de chaleur pour cet appareil.

On connaît déjà des appareils de réaction gaz-liquide, par exemple du type comportant un récipient étanche et résistant à la pression, formés d'une cuve et d'un couvercle, et un dispositif échangeur de chaleur, par exemple comme décrit dans le brevet EP 0 633 060 de la même titulaire.

D'autre part, il s'est avéré indispensable en pratique, plus particulièrement dans les domaines de la chimie fine, alimentaire, pharmaceutique, etc, de pouvoir disposer de tels appareils de réaction gaz-liquide ou liquide-liquide qui soient totalement neutres et inertes par rapport aux produits mis en oeuvre, et par conséquent d'appareils dont les éléments constitutifs sont pourvus d'un revêtement protecteur, par exemple en émail, sous forme d'un dépôt métallique ou d'un revêtement synthétique fluoré, etc.

Or, si un tel revêtement protecteur peut relativement aisément être déposé sur la surface interne de la cuve et du couvercle d'un appareil de réaction, il n'en est pas de même en ce qui concerne notamment le dispositif échangeur de chaleur, par exemple du type de celui décrit dans le brevet EP 0 633 060 précité, qui est trop complexe et présente trop de pièces constitutives pour être protégé par un revêtement adéquat.

En conséquence, le but de cette invention consiste à fournir un appareil de réaction comportant un dispositif échangeur de chaleur qui est muni d'un revêtement protecteur.

Un premier objet de l'invention, visant à atteindre le but précité, consiste en un appareil de réaction qui présente les caractéristiques définies dans la revendication 1.

Un second objet de cette invention est constitué par un dispositif échangeur de chaleur, destiné à équiper un réacteur et qui est tel que défini dans la revendication 8.

L'invention sera maintenant décrite plus en détails, en référence au dessin annexé, qui représente à titre d'exemple une forme d'exécution de l'appareil de réaction gaz-liquide et du dispositif échangeur de chaleur.

Les figures 1 et 2 en sont des vues respectivement en coupe verticale et en coupe horizontale.

La figure 3 est une vue en coupe verticale d'un détail du dispositif échangeur de chaleur.

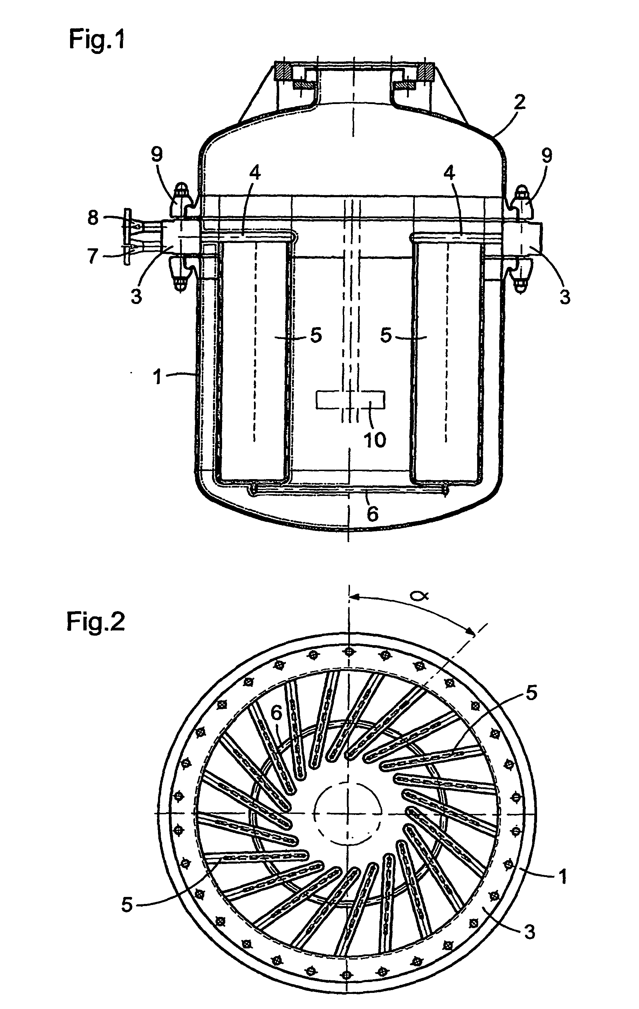

Comme représenté sur les figures 1 et 2, l'appareil de réaction comprend un récipient formé d'une cuve 1, de préférence cylindrique, dont l'ouverture supérieure est fermée de manière étanche en position de service par un couvercle 2. D'autre part, un dispositif échangeur de chaleur est logé dans la cuve 1; plus particulièrement, ce dispositif comporte une pièce-support annulaire 3, insérée en position de service entre la cuve 1 et le couvercle 2, cette pièce-support 3 portant des bras 4, auxquels sont suspendues des plaques échangeuses de chaleur. L'extrémité inférieure des plaques 5 peut être maintenue par fixation à un élément circulaire 6 ; selon une variante non illustrée, plusieurs éléments circulaires de fixation peuvent être prévus, ces éléments pouvant être pleins ou creux.

Les bras 4 comportent des conduits coaxiaux débouchant sur des embouts d'entrée 7 et de sortie 8 d'un fluide caloporteur. Selon une variante non représentée, il peut y avoir plusieurs embouts d'entrée respectivement de sortie. La pièce-support 3 est serrée entre la cuve 1 et le couvercle 2 par des éléments de serrage 9. Enfin, l'appareil de réaction gaz-liquide comporte encore un dispositif d'agitation 10 (non illustré en détails) assurant la mise en contact gaz-liquide, et le cas échéant combiné avec un tube d'introduction du réactif gazeux.

Comme illustré sur la figure 2, les plaques verticales 5 de l'échangeur de chaleur sont fixées avec un angle α dans le sens de la rotation de l'agitateur, cet angle α pouvant être par exemple compris entre 0 et 70°, de préférence entre 30 et 55°, comme décrit dans le brevet précité EP 0 633 060.

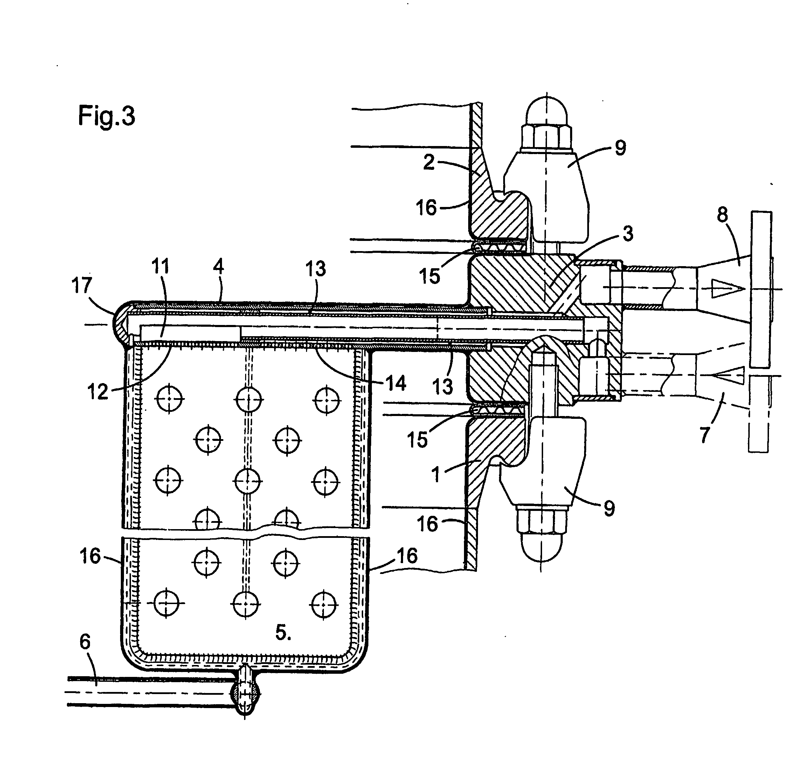

Comme illustré plus en détails sur la figure 3, chaque bras 4 comporte un conduit interne 11 d'amenée du fluide caloporteur à partir de l'embout d'entrée 7, ce conduit 11 débouchant par des ouvertures 12 dans la plaque échangeuse de chaleur 5. Cette plaque 5 est en fait réalisée par l'assemblage de deux plaques soudées l'une à l'autre par leur périphérie de manière à définir une chambre interne entre elles pour la circulation du fluide thermique. De préférence, les plaques 5 sont du type"sandwich" pré-embouties ou gonflées après soudage, ce qui tend à assurer une meilleure turbulence du liquide réactionnel agité.

Le bras 4 comporte encore un conduit externe 13, coaxial au conduit interne 11, pour la sortie du fluide thermique vers l'embout de sortie 8, ledit liquide passant de l'espace entre les plaques 5 au conduit externe 13 par des ouvertures 14.

D'autre part, comme représenté sur la figure 3, l'étanchéité du récipient est assurée par des joints élastiques annulaires 15, serrés en position de service par les organes de serrage 9 entre la cuve 1 et la pièce-support 3 d'une part et entre cette pièce 3 et le couvercle 2 d'autre part.

Enfin, grâce au fait que le dispositif échangeur de chaleur est de construction simple, compact et constitué d'un nombre restreint d'éléments, et formant un ensemble indépendant, la surface entière de ce dispositif peut être pourvue d'un revêtement protecteur, par exemple émaillé, métallisé ou synthétique.

Sur la figure 3, la surface munie d'un revêtement protecteur 16 est représentée en trait plus gras. Bien entendu, le même revêtement protecteur 16 peut recouvrir la surface interne de la cuve 1 et du couvercle 2 de l'appareil de réaction.

Enfin, les éléments constitutifs du dispositif échangeur de chaleur sont de préférence réalisés de telle sorte qu'ils ne présentent que des arêtes ou des extrémités arrondies, comme par exemple l'extrémité des bras 4 représentée par la référence 17, de manière à faciliter et à rendre plus efficace et résistant le revêtement protecteur, ainsi qu'à rendre le nettoyage de l'appareil mieux compatible avec les normes cGMP.

## Revendications

1. Appareil de réaction comportant un récipient étanche et résistant à la pression, formé d'une cuve (1) et d'un couvercle (2), et un dispositif échangeur de chaleur, **caractérisé par le fait que** le dispositif échangeur de chaleur comporte une pièce-support annulaire (3) disposée en position de service entre ladite cuve (1) et ledit couvercle (2), et des plaques (5) échangeuses de chaleur disposées en position de service à l'intérieur de ladite cuve (1) et portées sensiblement verticalement par des bras (4) solidaires de la pièce-support annulaire (3), **par le fait que** des collecteurs circulaires sont incorporés à ladite pièce-support (3) pour la circulation d'un fluide thermique et coopèrent avec des conduits coaxiaux (11, 13) formant lesdits bras (4) et avec des chambres de circulation internes que présentent lesdites plaques (5), et **par le fait que** ledit dispositif échangeur de chaleur forme un tout indépendant qui est muni sur sa surface externe d'un revêtement protecteur (16).

2. Appareil de réaction selon la revendication 1, **caractérisé par le fait qu'**il comporte un dispositif d'agitation rotatif (10) assurant la mise en contact des réactifs et disposé sensiblement verticalement au centre de ladite cuve (1).

3. Appareil de réaction selon la revendication 1ou la revendication 2, **caractérisé par le fait que** les plaques (5) échangeuses de chaleur sont maintenues par leur extrémité inférieure à au moins un élément de fixation circulaire (6).

4. Appareil de réaction selon la revendication 2 ou la revendication 3, **caractérisé par le fait que** les plaques (5) échangeuses de chaleur sont disposées de manière à former un angle (α) compris entre 0 et 70° par rapport au rayon dans le sens de rotation du dispositif d'agitation.

5. Appareil de réaction selon l'une des revendications 1 à 4, **caractérisé par le fait que** la pièce-support annulaire (3) est maintenue entre le couvercle (2) et la cuve (1) du récipient par des organes de serrage (9 , des joints élastiques annulaires (15) assurant l'étanchéité entre le couvercle (2) et la pièce-support (4) et entre celle-ci et la cuve (1).

6. Appareil de réaction selon l'une des revendications 1 à 5, **caractérisé par le fait que** les conduits coaxiaux (11, 13) formant lesdits bras (4) coopèrent avec des embouts d'entrée (7) respectivement de sortie (8) du fluide thermique.

7. Appareil de réaction selon l'une des revendications 1 à 6, **caractérisé par le fait que** la surface interne de la cuve (1) et du couvercle (2) est munie d'un revêtement protecteur (16) similaire à celui du dispositif échangeur de chaleur.

8. Dispositif échangeur de chaleur pour appareil de réaction, **caractérisé par le fait qu'**il comporte une pièce-support circulaire (3) incorporant deux collecteurs pour la circulation d'un fluide thermique, et des plaques (5) échangeuses de chaleurs portées sensiblement verticalement par des bras (4) solidaires de la pièce-support, **par le fait que** les deux collecteurs circulaires coopèrent avec des conduits coaxiaux (11, 13) formant lesdits bras (4), ceux-ci communiquant avec des chambres de circulation internes que présentent lesdites plaques (5), et **par le fait que** ce dispositif est muni sur sa surface externe d'un revêtement protecteur (16).

9. Dispositif selon la revendication 8, **caractérisé par le fait que** les plaques (5) échangeuses de chaleur sont maintenues par leur extrémité inférieure à au moins un élément de fixation circulaire (6).

10. Dispositif selon la revendication 8 ou la revendication 9, **caractérisé par le fait que** les conduits coaxiaux (11, 13) formant lesdits bras (4) coopèrent avec des embouts d'entrée (7) respectivement de sortie (8) du fluide thermique.

11. Dispositif selon l'une des revendications 8 à 10, **caractérisé par le fait que** le revêtement protecteur (16) est en émail, en un matériau synthétique ou en un alliage métallique.

## Patentansprüche

1. Reaktor mit einem dichten, druckfesten Behälter, aus einem Kessel (1) und einem Deckel (2) gebildet, und mit einer Wärmeaustauschvorrichtung, **dadurch gekennzeichnet, dass** die Wärmeaustauschvorrichtung einen ringförmigen Halter (3), der in der Arbeitsstellung zwischen dem Kessel (1) und dem Deckel (2) angeordnet ist, sowie Wärmeaustauschplatten (5) umfasst, die in der Arbeitsstellung im Inneren des Kessels (1) angeordnet sind und im Wesentlichen senkrecht durch Arme (4) gehalten werden, die fest mit dem ringförmigen Halter (3) verbunden sind, **dadurch**, dass kreisförmige Sammler für den Kreislauf eines Wärmefluids in den Halter (3) eingebaut sind und mit koaxialen Rohren (11, 13), die die Arme (4) bilden, sowie mit inneren Kreislaufkammern zusammenwirken, die in den Platten (5) vorhanden sind, und **dadurch**, dass die Wärmeaustauschvorrichtung ein unabhängiges Ganzes bildet, das auf seiner Aussenseite mit einem Schutzüberzug (16) versehen ist.

2. Reaktor nach Anspruch 1, **dadurch gekennzeichnet, dass** er ein Drehrührwerk (10) aufweist, das die Kontaktierung der reagierenden Stoffe gewährleistet und im Wesentlichen senkrecht in der Mitte des Kessels (1) angeordnet ist.

3. Reaktor nach Anspruch 1 oder Anspruch 2, **dadurch gekennzeichnet, dass** die Wärmeaustauschplatten (5) an ihrem unteren Ende an zumindest einem kreisförmigen Befestigungselement (6) gehalten werden.

4. Reaktor nach Anspruch 2 oder Anspruch 3, **dadurch gekennzeichnet, dass** die Wärmeaustauschplatten (5) so angeordnet sind, dass sie einen Winkel (α) zwischen 0 und 70° bezüglich des Radius in Drehrichtung des Rührwerks bilden.

5. Reaktor nach einem der Ansprüche 1 bis 4, **dadurch gekennzeichnet, dass** der ringförmige Halter (3) durch Spannelemente (9) zwischen dem Deckel (2) und dem Kessel (1) des Behälters gehalten wird, wobei ringförmige elastische Dichtungen (15) den dichten Abschluss zwischen dem Deckel (2) und dem Halter (4) sowie zwischen diesem und dem Kessel (1) gewährleisten.

6. Reaktor nach einem der Ansprüche 1 bis 5, **dadurch gekennzeichnet, dass** die die Arme (4) bildenden koaxialen Rohre (11, 13) mit Eintritts- (7) bzw. Austrittsstutzen (8) für das Wärmefluid zusammenwirken.

7. Reaktor nach einem der Ansprüche 1 bis 6, **dadurch gekennzeichnet, dass** die Innenseite des Kessels (1) und des Deckels (2) mit einem Schutzüberzug (16) ähnlich dem der Wärmeaustauschvorrichtung versehen ist.

8. Wärmeaustauschvorrichtung für Reaktor, **dadurch gekennzeichnet, dass** sie einen kreisförmigen Halter (3), in den zwei Sammler für den Kreislauf eines Wärmefluids eingebaut sind, sowie Wärmeaustauschplatten (5) umfasst, die im Wesentlichen senkrecht durch Arme (4) gehalten werden, die fest mit dem Halter verbunden sind, **dadurch**, dass die beiden kreisförmigen Sammler mit koaxialen Rohren (11, 13), die die Arme (4) bilden, zusammenwirken, wobei diese mit inneren Kreislaufkammern in Verbindung stehen, die in den Platten (5) vorhanden sind, und **dadurch**, dass diese Vorrichtung auf ihrer Aussenseite mit einem Schutzüberzug (16) versehen ist.

9. Vorrichtung nach Anspruch 8, **dadurch gekennzeichnet, dass** die Wärmeaustauschplatten (5) an ihrem unteren Ende an zumindest einem kreisförmigen Befestigungselement (6) gehalten werden.

10. Vorrichtung nach Anspruch 8 oder Anspruch 9, **dadurch gekennzeichnet, dass** die die Arme (4) bildenden koaxialen Rohre (11, 13) mit Eintritts- (7) bzw. Austrittsstutzen (8) für das Wärmefluid zusammenwirken.

11. Vorrichtung nach einem der Ansprüche 8 bis 10, **dadurch gekennzeichnet, dass** der Schutzüberzug (16) aus Email, einem Kunststoff oder einer Metalllegierung besteht.

## Claims

1. Reactor with a tight, pressure-resistant vessel formed of a tank (1) and a lid (2) and with a heat exchange device, **characterised in that** the heat exchange device comprises an annular supporting part (3) which in the working position is arranged between said tank (1) and said lid (2), and heat exchange plates (5) which in the working position are arranged inside said tank (1) held essentially vertically by arms (4) solidly attached to the annular supporting part (3); **in that** circular manifolds are built into said supporting part (3) for circulation of a thermal fluid which cooperate with coaxial pipes (11, 13) that form these arms (4) as well as with internal circulation chambers present in said plates (5); and **in that** said heat exchange device forms an independent whole that on its outside is provided with a protective coating (16).

2. Reactor according to claim 1, **characterised in that** it comprises a rotary agitator (10) that ensures the bringing in contact of the reactants, and is set up essentially vertically in the centre of said tank (1).

3. Reactor according to claim 1 or claim 2, **characterised in that** the heat exchange plates (5) are held at their lower ends by at least one circular fastener element (6).

4. Reactor according to claim 2 or claim 3, **characterised in that** the heat exchange plates (5) are arranged so as to form an angle (α) comprised between 0 and 70° relative to the radius in the direction of rotation of the agitator.

5. Reactor according to one of claims 1 to 4, **characterised in that** the annular supporting part (3) is held by clamping elements (9) between the lid (2) and tank (1) of the vessel, with annular elastic gaskets (15) ensuring a tight seal between the lid (2) and the supporting part (4) as well as between the latter and the tank (1).

6. Reactor according to one of claims 1 to 5, **characterised in that** the coaxial pipes (11, 13) forming the arms (4) cooperate with entrance (7) and exit (8) connections for the thermal fluid.

7. Reactor according to one of claims 1 to 6, **characterised in that** the inside of tank (1) and lid (2) are provided with a protective coating (16) similar to that of the heat exchange device.

8. Heat exchange device for reactor, **characterised in that** it comprises a circular supporting part (3) incorporating two manifolds for circulation of a thermal fluid, as well as heat exchange plates (5) held essentially vertically by arms (4) solidly connected with the supporting part; **in that** the two circular manifolds cooperate with coaxial pipes (11, 13) forming said arms (4) and being in communication with internal circulation chambers present in said plates (5); and **in that** this device is provided with a protective coating (16) on its outside.

9. Device according to claim 8, **characterised in that** the heat exchange plates (5) are held at their lower ends by at least one circular fastening element (6).

10. Device according to claim 8 or claim 9, **characterised in that** the coaxial pipes (11, 13) forming said arms (4) cooperate with entrance (7) and exit (8) connections for the thermal fluid.

11. Device according to one of claims 8 to 10, **characterised in that** the protective coating (16) consists of enamel, a synthetic material or a metal alloy.
